(19) Europäisches Patentamt
European Patent Office
Office européen des brevets

(11) **EP 3 588 757 B1**

(12) **EUROPÄISCHE PATENTSCHRIFT**

(45) Veröffentlichungstag und Bekanntmachung des Hinweises auf die Patenterteilung:
**19.08.2020  Patentblatt 2020/34**

(51) Int Cl.:
*H02M 1/36* (2007.01)   *H02M 1/00* (2006.01)
*G05F 1/46* (2006.01)   *G01N 21/3504* (2014.01)
*G01N 21/25* (2006.01)   *H05B 41/282* (2006.01)
*H05B 41/285* (2006.01)   *G01N 21/01* (2006.01)

(21) Anmeldenummer: **18179005.6**

(22) Anmeldetag: **21.06.2018**

(54) **ELEKTRONISCHE ANORDNUNG, OPTISCHER GASSENSOR MIT EINER SOLCHEN ELEKTRONISCHEN ANORDNUNG UND VERFAHREN ZUR LEISTUNGSSTEUERUNG EINER STRAHLUNGSQUELLE MITTELS EINER SOLCHEN ELEKTRONISCHEN ANORDNUNG**

ELECTRONIC ASSEMBLY, OPTICAL GAS SENSOR COMPRISING SUCH AN ELECTRONIC ASSEMBLY AND METHOD FOR CONTROLLING THE POWER OF A RADIATION SOURCE BY MEANS OF AN ELECTRONIC ASSEMBLY

DISPOSITIF ÉLECTRONIQUE, CAPTEUR OPTIQUE DE GAZ DOTÉ D'UN TEL DISPOSITIF ÉLECTRONIQUE ET PROCÉDÉ DE COMMANDE DE PUISSANCE D'UNE SOURCE DE RAYONNEMENT AU MOYEN D'UN TEL DISPOSITIF ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.01.2020  Patentblatt 2020/01**

(73) Patentinhaber: **E+E ELEKTRONIK GES.M.B.H.**
**4209 Engerwitzdorf (AT)**

(72) Erfinder:
• **Weilguni, Michael**
  **4232 Hagenberg (AT)**
• **Filosomi, Federico**
  **4020 Linz (AT)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**US-A1- 2009 021 970     US-A1- 2012 078 532**
**US-A1- 2013 265 807     US-B1- 6 347 544**

**Beschreibung**

Die vorliegende Erfindung betrifft eine elektronische Anordnung sowie einen optischen Gassensor, der eine solche elektronische Anordnung umfasst. Außerdem betrifft die Erfindung ein Verfahren zur Leistungssteuerung einer Strahlungsquelle unter Verwendung einer derartigen elektronischen Anordnung. Dabei können die erfindungsgemäßen Vorrichtungen und das erfindungsgemäße Verfahren insbesondere im Zusammenhang mit einer Infrarot-Strahlungsquelle bei einem optischen Gassensor zum Einsatz kommen.

Optische Gassensoren umfassen häufig eine Infrarot-Strahlungsquelle, z. B. in Form einer Glühlampe, welche Wärmestrahlung auf ein in einer Messzelle aufgenommenes Gas emittiert. Das Gas absorbiert einen Teil der Strahlung bei bestimmten Wellenlängen. Ein Detektor, beispielsweise eine Fotodiode, detektiert sodann zumindest Teile der Wärmestrahlung, welche die Messzelle durchlaufen hat, und liefert ein entsprechendes Signal (z. B. im Fall einer Fotodiode einen Fotostrom), aus welchem eine Gaskonzentration in der Messzelle bestimmt werden kann.

Für eine solche Messung wird die Strahlungsquelle üblicherweise für eine bestimmte Impulsdauer, die beispielsweise einige 100 ms betragen kann, eingeschaltet, um einen Strahlungsimpuls zu erzeugen. Hierbei kann zu Beginn der Impulsdauer ein vergleichsweise großer Einschaltspitzenstrom auftreten. Dies trifft insbesondere auf Strahlungsquellen mit PTC-Verhalten zu, d. h. auf solche Strahlungsquellen, die einen positiven Temperaturkoeffizienten (positive temperature coefficient) aufweisen. Damit ist gemeint, dass ein elektrischer Widerstand der Strahlungsquelle bei niedrigen Temperaturen (z. B. bei Raumtemperatur zum Einschaltzeitpunkt) niedriger ist als bei höheren Temperaturen (z. B. einige Zeit nach dem Einschalten). Üblicherweise weisen bei optischen Gassensoren verwendete Strahlungsquellen ein solches PTC-Verhalten auf.

Bei Glühlampen können aufgrund des PTC-Verhaltens derartige unerwünschte Einschaltspitzenströme auftreten, welche beispielsweise um einen Faktor 8 bis 10 oberhalb eines eigentlichen Betriebsstroms liegen. Die Einschaltspitzenströme müssen von der Stromversorgung des Gassensors bereitgestellt und daher bei der Auslegung des Systems berücksichtigt werden. Beispielsweise können hierdurch bei Bus-betriebenen Systemen relativ große (und teure) Energiepuffer erforderlich sein. Bei batteriebetriebenen Systemen kann durch hohe Einschaltspitzenströme die Lebensdauer der Batterie sinken. Ein möglichst niedriger Einschaltspitzenstrom ist daher für Anwender von optischen Gassensoren ein Auswahlkriterium und für Hersteller dementsprechend ein wichtiges Designziel. In einem denkbaren Idealfall wäre es z. B. wünschenswert, dass überhaupt kein Einschaltspitzenstrom zu erkennen ist, d. h., dass der Stromverlauf rechteckig ist und der Stromverbrauch über die Impulsdauer im Wesentlichen konstant ist.

Bei einigen kommerziell erhältlichen $CO_2$-Sensoren wird zur Reduktion des Einschaltspitzenstroms ein Vorwiderstand verwendet. Diese vergleichsweise kostengünstige Lösung hat jedoch den Nachteil, dass der Vorwiderstand über die gesamte Impulsdauer hinweg zu der Strahlungsquelle in Serie geschaltet ist und somit permanent Energie verbraucht. Je größer der Vorwiderstand gewählt wird, desto kleiner ist zwar der Einschaltspitzenstrom, desto geringer ist aber auch die Energie, die der Strahlungsquelle zur Abstrahlung effektiv zur Verfügung steht.

Andere am Markt erhältliche $CO_2$-Sensoren realisieren einen Betrieb der Strahlungsquelle bei Konstantstrom, wodurch prinzipbedingt keine Spitzenströme auftreten. Nachteilig bei dieser Lösung ist, dass die Spannung an der Strahlungsquelle zunächst relativ niedrig ist, über die Zeit aber überproportional ansteigt. Ein wählbarer Maximalstrom bzw. die Impulsdauer sind hierdurch begrenzt, weil sonst die Spannung an der Strahlungsquelle die Stromquelle in Sättigung bringen würde. Darüber hinaus weisen bei einem Konstantstrombetrieb die Spannung und somit die Leistung an der Strahlungsquelle eine ausgeprägte Temperaturabhängigkeit auf. Ferner wird ein Alterungseffekt der Strahlungsquelle, d. h. ein Ansteigen eines (Kalt-)Widerstands über die Lebensdauer der Strahlungsquelle, durch den Konstantstrombetrieb verstärk, da - im Unterschied zum Konstantspannungsbetrieb - ein erhöhter Kaltwiderstand nicht zu einem kleineren Strom führt und die Schaltung somit keine Selbstregelung erfährt.

In der US 2016/0172855 A1 wird die Beaufschlagung einer resistiven Last, wie z. B. eines IR-Emitters in einem FTIR-Spektrometer (Fourier-Transformations-Infrarotspektrometer), mit einer konstanten elektrischen Leistung vorgeschlagen. Auch in der US 5,095,270 ist vorgesehen, eine IR-Lichtquelle in einem Gassensor mit konstanter Leistung zu versorgen. In beiden Fällen werden ein Stromsensor und ein (Analog-)Multiplizierer benötigt, um die Leistung zu regeln.

In der US 6,023,069 wird der Betrieb einer Strahlungsquelle bei einer quasi-konstanten Leistung über die Lebensdauer vorgeschlagen, wobei zu diesem Zweck entsprechende Widerstände zwischen einer Spannungsquelle und der Strahlungsquelle verschaltet werden. Hierbei wird das dynamische Verhalten der Strahlungsquelle jedoch nicht berücksichtigt.

Die US 2012/0078532 A1 schlägt die Verwendung von geregelten Strom- bzw. Spannungspuffern vor, um bei einem Infrarotdetektorsystem zur Bestimmung einer Gaskonzentration auftretende Stromspitzen zu reduzieren.

Bei den vorgenannten im Stand der Technik bekannten Lösung können aufgrund des PTC-Verhaltens der Strahlungsquelle nach wie vor Stromspitzen beim Einschalten auftreten.

Hiervon ausgehend liegt der vorliegenden Erfindung das Problem zugrunde, eine elektronische Anordnung sowie ein Verfahren bereitzustellen, welche mit einem vergleichsweise geringen schaltungstechnischen Aufwand eine Vermeidung bzw. Reduktion von Einschaltspitzenströmen einer Strahlungsquelle, z. B. bei einem optischen Gassensor, erlaubt. Ferner soll ein optischer Gassensor mit solchen Eigenschaften bereitgestellt werden.

Zur Lösung dieses Problems werden eine elektronische Anordnung, ein optischer Gassensor sowie ein Verfahren zur Leistungssteuerung einer Strahlungsquelle gemäß den unabhängigen Patentansprüchen vorgeschlagen. Merkmale einiger Ausführungsbeispiele sind in den Unteransprüchen angegeben. Die Merkmale der Unteransprüche können miteinander zur Ausbildung weiterer Ausführungsformen kombiniert werden, sofern nicht ausdrücklich etwas anderes angegeben ist. Dabei können die nachstehend beschriebenen Merkmale der elektronischen Anordnung entsprechend auch bei dem optischen Gassensor verwirklicht sein und umgekehrt. Ebenso können Merkmale des Verfahrens sich in Merkmalen elektronischen Anordnung und/oder des optischen Gassensors widerspiegeln wie auch umgekehrt.

Gemäß einem ersten Aspekt umfasst eine elektronische Anordnung eine Strahlungsquelle und einen geregelten Spannungswandler. Die Strahlungsquelle kann insbesondere eine Infrarot-Strahlungsquelle sein. Beispielsweise ist die Strahlungsquelle eine Glühlampe oder ein Dünnschichtemitter. Der Spannungswandler ist ausgebildet, eine Lampenspannung für die Strahlungsquelle bereitzustellen, um die Strahlungsquelle für eine Impulsdauer in einem eingeschalteten Zustand zu betreiben. Der Spannungswandler ist ausgebildet, die Lampenspannung derart zu regeln, dass an einem Feedback-Anschluss des Spannungswandlers eine Referenzspannung im Wesentlichen konstant gehalten wird. Die elektronische Anordnung umfasst ferner eine Spannungsquelle, die mit dem Feedback-Anschluss verbunden ist, wobei die Spannungsquelle ausgebildet ist, eine zeitabhängige Steuerspannung mit einem vordefinierten zeitlichen Verlauf bereitzustellen und hierdurch über den Feedback-Anschluss auf die Regelung des Spannungswandlers derart einzuwirken, dass der Spannungswandler in Abhängigkeit des vordefinierten zeitlichen Verlaufs der Steuerspannung einen zeitlichen Verlauf der Lampenspannung in der Weise vorgibt, dass eine Leistung der Strahlungsquelle während mindestens 90% (wie z. B. mindestens 95% oder sogar mindestens 99%) der Impulsdauer um höchstens 25% (wie z. B. höchstens 20%, höchstens 10% oder höchstens 5%) von einem Konstantleistungswert abweicht. In einer bevorzugten Ausführungsform kann vorgesehen sein, dass die Leistung der Strahlungsquelle während der gesamten Pulsdauer um höchstens 25% (wie z. B. höchstens 20%, höchstens 10% oder höchstens 5%) von einem Konstantleistungswert abweicht.

Im Rahmen der vorliegenden Anmeldung ist mit einer Aussage, wonach ein elektrisches Element mit einem anderen elektrischen Element "verbunden" ist, gemeint, dass zwischen den beiden elektrischen Elementen eine niederohmige elektrische Verbindung vorliegt.

Ferner soll im Folgenden unter einer "Masse" eine Struktur verstanden werden, welche ein Referenzpotenzial bereitstellt. Dieses kann, muss aber nicht notwendigerweise das Erdpotenzial sein.

Wenn im Folgenden von "Lampe", "Lampenstrom", "Lampenleistung", "Lampenwiderstand" etc. die Rede ist, soll darunter die jeweilige elektrische Größe der bzw. an der Strahlungsquelle, unabhängig von der Art der Strahlungsquelle, verstanden werden.

Die Strahlungsquelle kann z. B. eine Infrarot-Strahlungsquelle sein. Insbesondere kann die Strahlungsquelle ein PTC-Verhalten aufweisen, d. h. dass ein elektrischer Widerstand der Strahlungsquelle einen positiven Temperaturkoeffizienten hat. Beispiele für derartige Strahlungsquellen sind Glühlampen oder Dünnschichtemitter.

Ein zweiter Erfindungsaspekt betrifft einen optischen Gassensor, der eine elektronische Anordnung gemäß dem ersten Erfindungsaspekt umfasst.

Ein dritter Aspekt sieht vor, dass ein Verfahren zur Leistungssteuerung einer Strahlungsquelle die folgenden Schritte umfasst: Bereitstellen einer elektronischen Anordnung gemäß dem ersten Erfindungsaspekt; Betreiben der Strahlungsquelle in dem eingeschalteten Zustand für die Impulsdauer; und Bereitstellen der zeitabhängigen Steuerspannung derart, dass die Leistung der Strahlungsquelle während mindestens 90% (wie z. B. mindestens 95% oder sogar mindestens 99%) der Impulsdauer um höchstens 25% (wie z. B. höchstens 20%, höchstens 10% oder höchstens 5%) von einem Konstantleistungswert abweicht. In einer bevorzugten Ausführungsform kann sogar vorgesehen sein, dass die Leistung der Strahlungsquelle während der gesamten Pulsdauer um höchstens 25% (wie z. B. höchstens 20%, höchstens 10% oder höchstens 5%) von einem Konstantleistungswert abweicht.

Nachstehend wird auf alle drei vorstehend genannten Aspekte Bezug genommen werden.

Die Erfindung geht von dem Gedanken aus, dass Einschaltspitzenströme bei einer Strahlungsquelle reduziert oder sogar gänzlich vermieden werden können, indem die Strahlungsquelle in Kenntnis und unter Berücksichtigung ihres dynamischen Verhaltens während einer Impulsdauer mit einer quasi-konstanten Leistung betrieben wird. Dabei wird die Leistung nicht geregelt, sondern durch eine geeignete zeitabhängige Steuerspannung gesteuert.

Ein zeitlicher Verlauf der Steuerspannung wird dabei, z. B. unter Berücksichtigung elektrischer und/oder thermischer Eigenschaften der Strahlungsquelle, im Vorhinein festgelegt, d. h. vordefiniert. Mit anderen Worten hängt der zeitliche Verlauf der Steuerspannung z. B. nicht von aktuellen (gemessenen) elektrischen Größen an der Strahlungsquelle, wie z. B. einem Lampenstrom, einer Lampenspannung oder einer Lampenleistung, ab. Insoweit findet keine Regelung der Lampenleistung statt, und das Verfahren zur Leistungssteuerung der Strahlungsquelle kann somit ohne eine Messung eines Lampenstroms oder einer Lampenspannung auskommen. Dementsprechend kann die elektronische Anordnung ohne Strom- oder Spannungssensoren an der Strahlungsquelle auskommen. Der zeitliche Verlauf der Steuerspannung kann jedoch abhängig von im Vorhinein (d. h. vor Beginn der Impulsdauer) bekannten Parametern wie z. B. elektrischen und/oder thermischen Kenngrößen der elektrischen Anordnung (einschließlich der Strahlungsquelle) und/oder einer Umgebungstemperatur festgelegt werden. Beispielsweise kann der zeitliche Verlauf der Steuerspannung in Abhängigkeit eines Wärmewiderstands und/oder einer Wärmekapazität der Strahlungsquelle festgelegt werden.

Gemäß einer Ausführungsform wird der zeitliche Verlauf der Steuerspannung so gewählt, dass ein Einschaltspitzenstrom eines Eingangsstroms in den Spannungswandler, welcher zu Beginn der Impulsdauer auftreten kann, betragsmäßig kleiner oder gleich dem 1,25-Fachen eines über die Impulsdauer gemittelten Wertes des Eingangsstroms ist. Bevorzugt kann der Einschaltspitzenstrom betragsmäßig kleiner oder gleich dem 1,2-Fachen, kleiner oder gleich dem 1,1-Fachen oder sogar kleiner oder gleich dem 1,05-Fachen des über die Impulsdauer gemittelten Wertes des Eingangsstroms sein.

Bei einer Variante umfasst die elektronische Anordnung einen Spannungsteiler, der eine Reihenschaltung aus einem ersten Widerstand und einem zweiten Widerstand umfasst. Dabei ist der Spannungsteiler auf Seiten des ersten Widerstands mit der Strahlungsquelle verbunden. Beispielsweise kann der Spannungsteiler auf diese Weise auf Seiten des ersten Widerstands die Lampenspannung abgreifen. Zugleich kann der Spannungsteiler auf Seiten des ersten Widerstands zusätzlich mit einem Ausgangsanschluss des Spannungswandlers verbunden sein. Auf Seiten des zweiten Widerstands ist der Spannungsteiler mit einem Masseanschluss der elektronischen Anordnung verbunden. Mit anderen Worten kann der Spannungsteiler auf Seiten des zweiten Widerstands beim bestimmungsgemäßen Betrieb der elektronischen Anordnung an ein Massepotenzial angeschlossen sein. Der Feedback-Anschluss ist mit dem Spannungsteiler in einem Bereich zwischen dem ersten Widerstand und dem zweiten Widerstand mit dem Spannungsteiler verbunden ist. Das heißt, dass der Feedback-Anschluss ein Potenzial zwischen dem ersten und dem zweiten Widerstand abgreift.

Zusätzlich kann gemäß einer Ausführungsform die Spannungsquelle, z. B. über einen dritten Widerstand, mit dem Feedback-Anschluss des Spannungswandlers verbunden sein. Die Spannungsquelle kann ferner, z. B. über den dritten Widerstand, mit dem Spannungsteiler in einem Bereich zwischen dem ersten Widerstand und dem zweiten Widerstand verbunden sein.

Es liegt im Rahmen der Erfindung, dass die Spannungsquelle ein Digital-Analog-Wandler, insbesondere ein gepufferter Digital-Analog-Wandler, sein kann oder einen solchen umfassen kann, wobei die zeitabhängige Steuerspannung als eine Ausgangsspannung des Digital-Analog-Wandlers bereitgestellt wird.

Gemäß einer Ausführungsform wird die zeitabhängige Steuerspannung derart bereitgestellt, dass sie während der Impulsdauer um höchstens 20% (wie z. B um höchstens 10% oder um höchstens 5%) von einem durch die folgende Gleichung bestimmten zeitlichen Verlauf abweicht:

$$v_{DAC} = v_{FB} \frac{R_3}{R_1}\left(1 + \frac{R_1}{R_2} + \frac{R_1}{R_3}\right)$$

$$-\frac{R_3}{R_1}\sqrt{P_{LP}R_{LP,25°C}\left[1 + \alpha\left(R_{th}P_{LP}\left(1 - e^{-\frac{t}{R_{th}C_{th}}}\right) + T_{amb} - 25°C\right)\right]}$$

Dabei ist

- $P_{Lp}$ ein vorgegebener Konstantleistungswert,
- $R_{LP,25°C}$ ein elektrischer Widerstand der Strahlungsquelle bei 25 °C,
- $\alpha$ ein Temperaturkoeffizient der Strahlungsquelle,
- $R_{th}$ ein Wärmewiderstand der Strahlungsquelle,
- $C_{th}$ eine Wärmekapazität der Strahlungsquelle und
- $T_{amb}$ eine Umgebungstemperatur.

Weitere Einzelheiten und Vorteile der Erfindung werden bei der nachfolgenden Beschreibung einiger Ausführungsbeispiele anhand der Figuren deutlich werden.

Es zeigen:

Figur 1    exemplarisch und schematisch einen optischen Gassensor;

Figur 2A    exemplarisch und schematisch ein einfaches elektrisches Modell einer Strahlungsquelle;

Figur 2B    exemplarisch und schematisch ein einfaches thermisches Modell der Strahlungsquelle aus Fig. 2A;

Figur 3    exemplarisch und schematisch eine elektronische Anordnung gemäß einer oder mehrerer Ausführungsformen;

Figur 4A    exemplarisch und schematisch einen simulierten zeitlichen Verlauf einer Lampenspannung und eines Lampenstroms während einer Impulsdauer bei unterschiedlichen Temperaturen;

Figur 4B    exemplarisch und schematisch einen simulierten zeitlichen Verlauf einer Lampenleistung während einer Impulsdauer bei unterschiedlichen Temperaturen;

Figur 5A    exemplarisch und schematisch einen simulierten sowie einen gemessenen zeitlichen Verlauf eines Lampenstroms während der Impulsdauer im Vergleich; und

Figur 5B    exemplarisch und schematisch einen simulierten sowie einen gemessenen zeitlichen Verlauf einer Lampenleistung während der Impulsdauer im Vergleich.

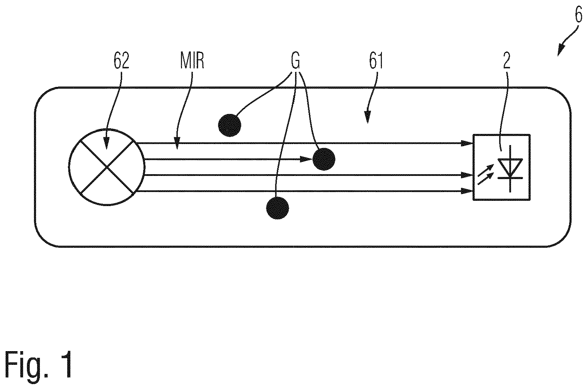

Die Figur 1 veranschaulicht schematisch und exemplarisch einen dem prinzipiellen Aufbau nach im Stand der Technik bekannten optischen Gassensor 6. Dabei wird von einer Infrarot-Strahlungsquelle 62, z. B. einer Glühlampe oder einem Dünnschichtemitter, Wärmestrahlung MIR emittiert. Zwischen einem Detektor (hier beispielhaft als Fotodiode 2 dargestellt) und der Strahlungsquelle 62 befindet sich die Messzelle 61 mit dem zu messenden Gas G, beispielsweise $CO_2$. Das Gas G absorbiert einen Teil der Wärmestrahlung MIR bei bestimmten Wellenlängen. Je nach Gaskonzentration liefert die Fotodiode 2 mehr oder weniger Fotostrom. Ein Signal der Fotodiode 2 kann somit zur Konzentrationsbestimmung des Gases verwendet werden.

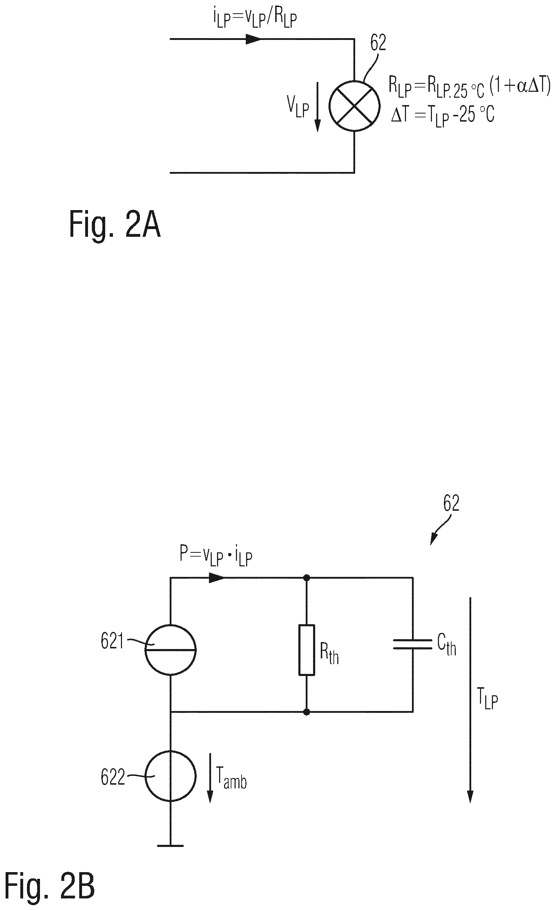

Die Figuren 2A und 2B zeigen exemplarisch und schematisch ein einfaches elektrisches bzw. thermisches Modell einer Strahlungsquelle 62, wie sie beispielsweise in dem vorstehend beschriebenen optischen Gassensor 6 verwendet werden kann. Dabei wird die Strahlungsquelle 61, vorliegend z. B. eine Glühlampe, in erster Näherung als ein temperaturabhängiger elektrischer Widerstand $R_{LP}$ (vgl. Fig. 2A) mit einer Wärmekapazität $C_{th}$ und Wärmewiderstand $R_{th}$ (vgl. Fig. 2B) modelliert. Über dem elektrischen Widerstand $R_{LP}$ fällt die Lampenspannung $V_{LP}$ ab. Der entsprechende Lampenstrom ist $iLP = V_{LP}/R_{LP}$. Der temperaturabhängige Lampenwiderstand $R_{LP}$ ergibt sich aus dem Lampenwiderstand bei 25 °C, $R_{LP,25°C}$, der Temperatur der Lampenwendel $T_{LP}$ und dem Temperaturkoeffizienten $\alpha$ der Wendel:

$$R_{LP}(t) = R_{LP,25°C}[1 + \alpha(T_{LP}(t) - 25\ °C)] \qquad (1)$$

Die Temperatur der Lampenwendel $T_{LP}$ hängt wiederum von der Umgebungstemperatur $T_{amb}$ und der zusätzlichen Erwärmung durch Einbringen von Energie ab. In dem thermischen Ersatzschaltbild in Fig. 2B stellt eine Wärmequelle 621 die an der Wendel umgesetzte Joulesche Wärmeleistung $P_{LP} = V_{LP}\ i_{LP}$ dar, und eine symbolische "Spannungsquelle" repräsentiert die Umgebungstemperatur $T_{amb}$, welche der Temperatur der Lampenwendel $T_{LP}$ im ausgeschalteten Zustand entspricht. Eine Wärmekapazität $C_{th}$ der Wendel sorgt gemäß dem thermischen Ersatzschaltbild in Fig. 2B für das dynamische Verhalten:

$$P_{LP} = v_{LP}\ i_{LP} = \frac{(T_{LP} - T_{amb})}{R_{th}} + C_{th}\frac{d(T_{LP} - T_{amb})}{dt} \qquad (2)$$

Diese Dynamik wird weiter unten zur Berechnung eines möglichen zeitlichen Verlaufs einer Steuerspannung $V_{DAC}$ verwendet werden.

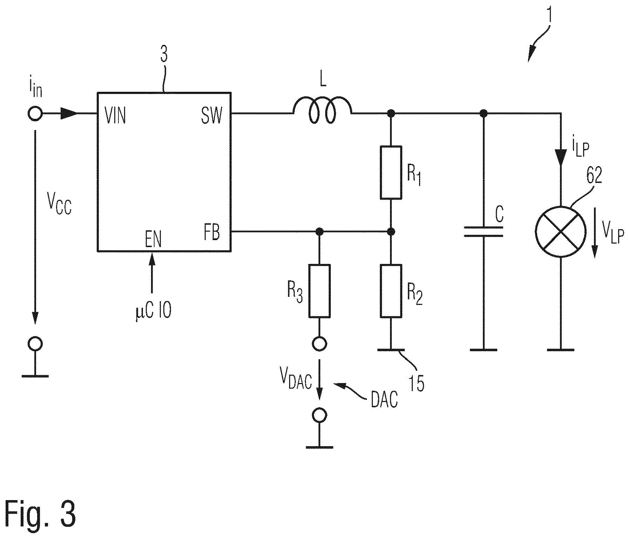

Die Figur 3 zeigt exemplarisch und schematisch eine elektronische Anordnung 1 gemäß einer oder mehrerer Ausführungsformen. Bei dem dargestellten Ausführungsbeispiel wird das Problem der Einschaltspitzenströme mit Hilfe eines Spannungswandlers 3 in Form eines DC/DC-Buck-Converters (auf Deutsch: Abwärtswandler oder Abwärts-Schaltregler) gelöst. Bei einem Buck-Converter muss eine Ausgangsspannung stets kleiner sein als eine Eingangsspannung. Eine erfindungsgemäße elektronische Anordnung lässt sich alternativ aber beispielsweise auch mit einem Buck-Boost-Converter, bei welchem die Ausgangsspannung kleiner oder größer als die Eingangsspannung sein kann, realisieren.

Der dargestellte Buck-Converter 3 hat einen Eingangsanschluss VIN, einen Ausgangsanschluss SW (gängige Bezeichnung für "switch node"), einen Steuereingang EN sowie einen Feedback-Anschluss FB. An dem Eingangsanschluss VIN liegt eine Versorgungsspannung $V_{cc}$ an. Der Ausgangsanschluss SW ist mit der Strahlungsquelle 62 verbunden. Die in Figur 3 dargestellte Induktivität L sowie die Kapazität C gehören funktionell zu dem Spannungswandler 3. Das mit dem Bezugszeichen 3 versehene Element in Figur 3 stellt genaugenommen nur ein Ansteuerungsmodul für einen Buck-Converter dar. Derartige Ansteuerungsmodule werden kommerziell häufig unter der Bezeichnung "Buck-Converter" angeboten, wobei funktionell zu dem Spannungswandler 3 gehörenden Bauteile, wie z. B. Spulen und Kondensatoren, welche eine entsprechende Induktivität L bzw. eine entsprechende Kapazität C bereitstellen, durch den Anwender je nach Bedarf zusätzlich, z. B. auf einer Leiterplatte, zur Verfügung gestellt werden.

In dem dargestellten Ausführungsbeispiel umfasst die elektronische Anordnung 1 ferner einen Mikrocontroller $\mu C$, der an den Steuereingang EN angeschlossen ist. Der Mikrocontroller $\mu C$ ist ausgebildet, ein Schaltelement des Buck-Converters 3 (nicht dargestellt) durch Bereitstellen eines entsprechenden Steuersignals ein- oder auszuschalten (EN= «High» bzw. «Low»). Im ausgeschalteten Zustand des Buck-Converters 3 (dauerhaft EN = «Low») benötigt die Schaltung kaum Strom ($\sim\mu A$). Bei einem Lampenpuls (d. h. während einer Impulsdauer $t_P$, die z. B. im Bereich von 50 ms bis 500 ms liegen kann) wird der Buck-Converter 3 über den Steuereingang EN mittels des Mikrocontrollers $\mu C$ derart angesteuert, dass die Spule L ständig (z. B. mit einer Frequenz im Bereich von 100 kHz bis 1 MHz) ein- und ausgeschaltet wird. Ein interner Regelkreis des Buck-Converters 3 sorgt dafür, dass sich durch das Zusammenspiel des Schaltelements, der Induktivität L und der Kapazität C am Ausgang der Schaltung, d. h. an der Strahlungsquelle 62, im Mittel die Lampenspannung $V_{LP}$ einstellt. Dem Fachmann ist die prinzipielle Funktionsweise eines Buck-Converters 3 und anderer Arten von geregelten Spannungswandlern 3 bekannt.

Aus einer gegebenen Lampenspannung $V_{LP}$ resultiert, wie bereits mit Bezug auf Figur 2A erläutert wurde, über den Lampenwiderstand $R_{LP}$ der Lampenstrom $i_{LP} = V_{LP}/R_{LP}$. Die elektronische Anordnung 1 hat in erster Näherung einen konstanten Wirkungsgrad $\eta$, z. B. in der Größenordnung von $\eta = 90\%$. Das Verhältnis von Eingangs- zu Ausgangsleistung ist demnach durch die folgende Gleichung gegeben:

$$P_{out} = P_{LP} = P_{in} \cdot \eta = V_{cc}\, i_{in}\, \eta.$$

Daraus ergibt sich der Eingangsstrom $i_{in}$ als

$$i_{in} = \frac{v_{LP}\, i_{LP}}{V_{cc}\, \eta}.$$

Dieser Eingangsstrom $i_{in}$ wird vom Anwender «gesehen» (d. h. muss von außen bereitgestellt werden) und soll daher möglichst frei von Spitzen, insbesondere Einschaltstromspitzen, sein. Dies wird erfindungsgemäß erreicht, indem das Produkt $V_{LP}\, i_{LP}$ über die Impulsdauer $t_P$ des Lampenpulses hinweg wenigstens annähernd konstant gehalten wird. Insbesondere unter der Annahme einer konstanten Versorgungsspannung $V_{cc}$ bleibt dann gemäß der vorstehenden Gleichung auch der Eingangsstrom $i_{in}$ frei von Spitzen.

Im Folgenden wird erläutert werden, wie die Lampenleistung $P_{LP}$ mittels einer elektronischen Anordnung 1 der in Figur 3 gezeigten Art über die Impulsdauer $t_P$ im Wesentlichen konstant gehalten werden kann.

Üblicherweise sind Gleichspannungswandler für eine konstante Ausgangsspannung konzipiert. Beispielsweise könnte bei dem Buck-Converter 3 gemäß Figur 3 eine konstante Lampenspannung $V_{LP}$ mittels eines Spannungsteilers eingestellt werden, welcher, wie dargestellt, eine Reihenschaltung aus einem ersten Wiederstand $R_1$ und einem zweiten Widerstand R2 umfasst. Dabei ist der Spannungsteiler auf Seiten des ersten Widerstands $R_1$ mit der Strahlungsquelle 62 und auf Seiten des zweiten Widerstands R2 mit einem Masseanschluss 15 der elektronischen Anordnung 1 verbunden. Der Masseanschluss 15 muss kein dedizierter Anschluss im Sinne einer Buchse o. Ä. sein, sondern kann beispielsweise auch einfach in einem Anschluss an ein Gehäuse (z. B. des optischen Gassensors 6) oder an ein irgendein beim bestimmungsgemäßen Betrieb mit Masse verbundenes Element der elektronischen Vorrichtung 1 bestehen.

Der Feedback-Anschluss FB des Buck-Converters 3 ist mit dem Spannungsteiler in einem Bereich zwischen dem ersten Widerstand $R_1$ und dem zweiten Widerstand R2 verbunden. Dabei ist der Buck-Converter 3 durch seinen internen Regelkreis ausgebildet, die Lampenspannung $V_{LP}$ derart zu regeln, dass eine Referenzspannung $V_{FB}$ an dem Feedback-Anschluss FB im Wesentlichen konstant (d. h. im Wesentlichen auf einem vorgegebenen Referenzwert) gehalten wird.

Bei dem dargestellten Ausführungsbeispiel ist eine zeitabhängige Spannungsquelle DAC, vorliegend beispielhaft in Form eines Ausgangs eines gepufferten Digital-Analog-Wandlers DAC, über einen dritten Widerstand $R_3$ mit dem Spannungsteiler in einem Bereich zwischen dem ersten Widerstand $R_1$ und dem zweiten Widerstand $R_2$ verbunden. Zugleich ist der Ausgang des Digital-Analog-Wandlers DAC mit dem Feedback-Anschluss FB verbunden. An dem Ausgang des Digital-Analog-Wandlers DAC kann eine zeitabhängige Steuerspannung $V_{DAC}$ mit einem bestimmten zeitlichen Verlauf vorgegeben werden. Beispielsweise kann der zeitliche Verlauf der Steuerspannung $V_{DAC}$ an dem Ausgang des Digital-Analog-Wandlers DAC stückweise durch einen Mikrokontroller vorgegeben werden.

Durch das gezielte Vorgeben des zeitlichen Verlaufs der Steuerspannung $V_{DAC}$ kann ein gewünschter zeitlicher Verlauf der Lampenspannung $V_{LP}$ eingestellt werden. Bei dem vorliegenden Ausführungsbeispiel ist der Zusammenhang zwischen der Steuerspannung $V_{DAC}$ und der Lampenspannung $V_{LP}$ in Folge des Spannungsteilers und der Feedback-Regelung der Referenzspannung $V_{FB}$ durch die folgende Gleichung gegeben:

$$v_{LP} = -\frac{R_1}{R_3} v_{DAC} + v_{FB}\left(1 + \frac{R_1}{R_2} + \frac{R_1}{R_3}\right) \qquad (3)$$

Die Referenzspannung $V_{FB}$ an dem Feedback-Ausgang FB wird von dem Buck-Converter 3 vorgegeben und kann beispielsweise in einem Bereich von 0,6 V bis 0,9 V liegen. Die Widerstände $R_1$, $R_2$ und $R_3$ werden bevorzugt so gewählt, dass ein Aussteuerbereich des Digital-Analog-Wandlers DAC inklusive Puffer die gewünschte Lampenspannung $V_{LP}$ (z. B. in einem Bereich von 0,6 V bis 2,4 V) abbilden kann.

Unter Berücksichtigung des obenstehend mit Bezug auf die Figuren 2A-B beschriebenen elektrischen und thermischen Modells der Strahlungsquelle 62 soll nun ein zeitlicher Verlauf der Steuerspannung $V_{LP}(t)$ festgelegt werden, der einen möglichst konstanten Verlauf der Lampenleistung $P_{LP}$ während der Pulsdauer tp bewirkt. Geht man zum Zweck der Herleitung von einer gewünschten konstanten Lampenleistung $P_{LP}$ aus, so wird aus der obigen Gleichung (2) eine Differentialgleichung, die mit folgendem Ansatz gelöst werden kann:

$$T_{LP}(t) - T_{amb} = R_{th} P_{LP}\left(1 - e^{-t/\tau}\right), \qquad \text{mit} \quad \tau = R_{th} C_{th} \qquad (4)$$

Dabei bezeichnet der Parameter t die Zeit. Setzt man die Lampentemperatur $T_{LP}$ aus Gleichung (4) in Gleichung (1) ein, so lässt sich mit

$$P_{LP} = v_{LP}^2 / R_{LP}$$

der zeitliche Verlauf der Lampenspannung $V_{LP}$ berechnen:

$$v_{LP}(t) = \sqrt{P_{LP} R_{LP,25\,°C}\left[1 + \alpha\left(R_{th} P_{LP}\left(1 - e^{-\frac{t}{R_{th} C_{th}}}\right) + T_{amb} - 25\,°C\right)\right]} \quad (5)$$

Somit kann bei diesem einfachen Lampenmodell der Verlauf der Lampenspannung $V_{LP}(t)$ analytisch berechnet werden. Einsetzen der Gleichung (5) in die Gleichung (3) und Auflösen nach der Steuerspannung $V_{DAC}$ ergibt den geeigneten zeitlichen Verlauf der DAC-Ausgangsspannung $V_{DAC}$ (d. h. der Steuerspannung):

$$v_{DAC}(t) = v_{FB} \frac{R_3}{R_1}\left(1 + \frac{R_1}{R_2} + \frac{R_1}{R_3}\right) -$$

$$\frac{R_3}{R_1}\sqrt{P_{LP} R_{LP,25°C}\left[1 + \alpha\left(R_{th} P_{LP}\left(1 - e^{-\frac{t}{R_{th} C_{th}}}\right) + T_{amb} - 25°C\right)\right]} \qquad (6)$$

Dabei bezeichnen

- $P_{Lp}$ den vorgegebenen (gewünschten) Konstantleistungswert,
- $R_{LP,25°C}$ den elektrischen Widerstand der Strahlungsquelle 62 bei 25 °C,
- $\alpha$ den Temperaturkoeffizienten der Strahlungsquelle 62 (z. B. der Wendel einer Glühlampe),
- $R_{th}$ den Wärmewiderstand der Strahlungsquelle 62,
- $C_{th}$ die Wärmekapazität der Strahlungsquelle 62 und
- $T_{amb}$ die Umgebungstemperatur der Strahlungsquelle 62.

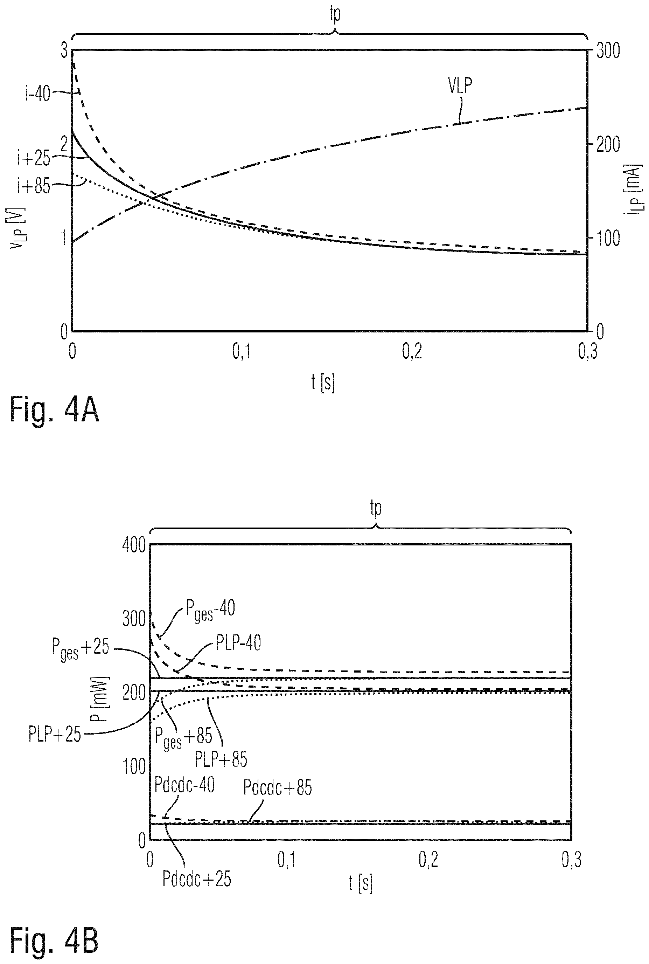

Die Figur 4A zeigt exemplarisch und schematisch einen simulierten zeitlichen Verlauf der Lampenspannung $V_{LP}$ bzw. des Lampenstroms $i_{LP}$ während einer Impulsdauer $t_P$ = 300 ms bei drei verschiedenen Temperaturen, nämlich 25 °C, 85 °C und -40 °C. Dabei wurde der zeitliche Verlauf der Steuerspannung $V_{DAC}$ jeweils gemäß der obigen Gleichung (6) für den festen Wert der Umgebungstemperatur $T_{amb}$ = 25 °C und einen gewünschte (Quasi-) Konstantleistungswert in Höhe von $P_{LP}$ = 200 mW berechnet.

Die Lampenspannung $V_{LP}$ (in Strichpunkten gezeichnete Kurve VLP) weist im Unterschied zu dem Lampenstrom $i_{LP}$ keine Temperaturabhängigkeit auf. Die durchgezogene Kurve i+25 zeigt den Lampenstrom $i_{LP}$ bei 25 °C, die gepunktete Kurve i+85 zeigt den Lampenstrom $i_{LP}$ bei 85 °C, und die gestrichelte Kurve i-40 zeigt den Lampenstrom $i_{LP}$ bei -40 °C. Die Kurve i+25 zeigt auch hier einen Lampenspitzenstrom zu Beginn des Impulses, aufgrund des Regelverhaltens des Buck-Converters ergibt sich aber ein konstanter Eingangsstrom $i_{in}$.

Es ist in der Figur 4A erkennbar, dass sich bei niedrigen Temperaturen wieder ein erhöhter Einschaltspitzenstrom bemerkbar macht (vgl. Kurve i-40). Dies kann im Rahmen eines erfindungsgemäßen Verfahrens kompensiert werden, indem zunächst die Umgebungstemperatur $T_{amb}$ gemessen wird. Eine solche Messung der Umgebungstemperatur $T_{amb}$ erfolgt im Betrieb eines $CO_2$-Gassensors 6 in der Regel ohnehin. Sodann wird der geeignete Steuerspannungsverlauf $V_{DAC}(t)$ gemäß Gleichung (6) unter Berücksichtigung der gemessenen Umgebungstemperatur $T_{amb}$ festgelegt und an dem DAC-Ausgang ausgegeben. Für die Bestimmung des Steuerspannungsverlaufs $V_{DAC}(t)$ können eine oder mehrere geeignete Datenverarbeitungseinrichtungen, wie z. B. (Mikro-)Prozessoren als Teil der elektronischen Anordnung 1 vorgesehen werden.

Die Figur 4B zeigt einen simulierten zeitlichen Verlauf der Lampenleistung während der Impulsdauer tp bei unterschiedlichen Temperaturen (25 °C, -40 °C, 85 °C), wobei die Lampenleistung sich jeweils aus denselben Simulationen ergibt wie die Kurven in Figur 4A bei den entsprechenden Temperaturen. Die durchgezogene Kurve Pges+25 ist eine Gesamtleistung der elektronischen Anordnung 1 bei 25 °C. Die durchgezogene Kurve PLP+25 zeigt die Lampenleistung bei 25 °C, die dem vorgegebenen Konstantleistungswert $P_{LP}$ = 200 mW entspricht. Die durchgezogene Kurve Pdcdc+25 zeigt eine in dem Spannungswandler 3 abfallende Leistung bei 25 °C. Die gestrichelten Kurven Pges-40, PLP-40 und Pdcdc-40 zeigen die Gesamtleistung, die Lampenleistung bzw. die in dem Spannungswandler 3 abfallende Leistung, jeweils bei -40 °C. Die gepunkteten Kurven Pges+85, PLP+85 und Pdcdc+85 zeigen die Gesamtleistung, die Lampenleistung bzw. die in dem Spannungswandler 3 abfallende Leistung, jeweils bei -85 °C. Aus dem Vergleich der Lampenleistung mit der jeweiligen Gesamtleistung wird der vergleichsweise große Wirkungsgrad (im Bereich von η = 90 %) der elektronischen Anordnung 1 deutlich. Damit lassen sich effiziente Gassensoren 6 mit geringer Eigenerwärmung aufbauen.

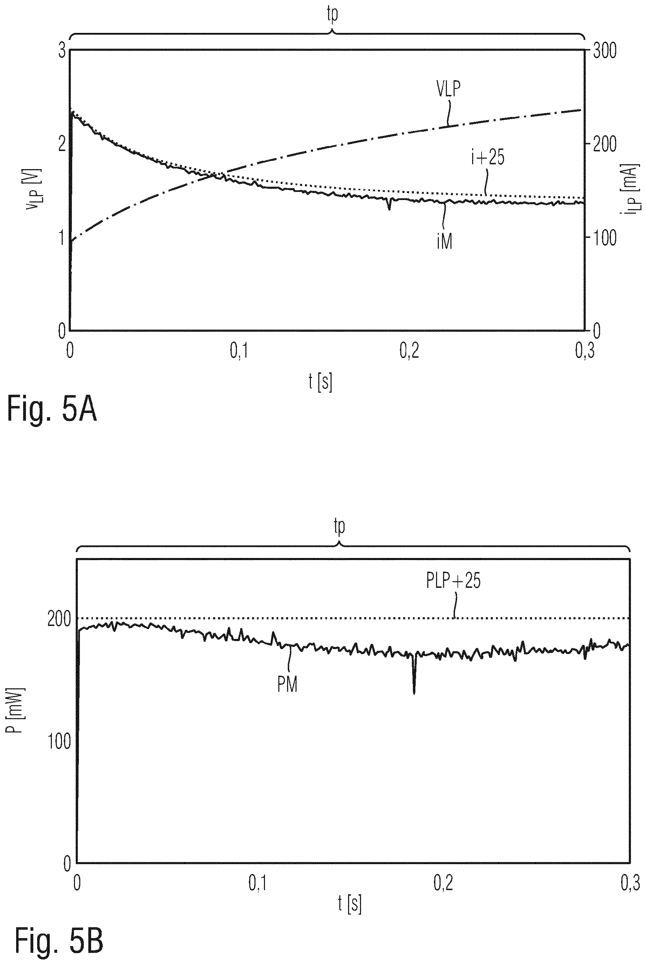

Die Figur 5A zeigt exemplarisch und schematisch den obigen simulierten zeitlichen Verlauf des Lampenstroms $i_{LP}$ im Vergleich mit einem gemessenen zeitlichen Verlauf. Zusätzlich zu der Lampenspannungskurve VLP und der Lampenstromkurve für 25 °C, i+25 (entsprechend der Kurve i+25 aus Figur 4A), ist eine Messkurve iM des Lampenstroms bei 25 °C eingezeichnet.

Die Figur 5B zeigt einen entsprechenden Vergleich für den zeitlichen Verlauf der Lampenleistung. Zusätzlich zu der Kurve PLP+25 (entsprechend der Kurve PLP+25 aus Figur 4B) ist eine zugehörige Messkurve PM eingezeichnet. Die Messkurve PM verläuft im Wesentlichen konstant und weicht während annähernd der gesamten Impulsdauer tp (bis auf Messartefakte bzw. Rauschen) um weniger als 20% von dem gewünschten Konstantleistungswert $P_{LP}$ = 200 mW ab. Die Messkurve PM stellt nur eine beispielhafte Messung dar. Mit der erfindungsgemäßen Vorrichtung und mit dem erfindungsgemäßen Verfahren lassen sich in der Anwendung auch noch deutlich geringere Abweichungen während der Impulsdauer $t_P$, wie z. B. um weniger als 15%, 10%, 5% oder sogar um weniger als 2% von einem gewünschten Konstantleistungswert $P_{LP}$ erzielen.

Es sollte beachtet werden, dass das hier beispielhaft verwendete einfache Lampenmodell nur eine erste Näherung darstellt. Zusätzliche Effekte, wie z. B. ein nichtkonstanter Temperaturkoeffizient von Wolfram, Zuleitungswiderstände, Temperaturabhängigkeit des Emissionsgrads, etc. sind hier nicht berücksichtigt. Es kann daher zweckmäßig sein, die Gleichung (6) um zusätzliche Parameter zu erweitern. Alternativ könnte der ideale Verlauf der Steuerspannung $V_{DAC}(t)$ auch über Polynome oder sonstige Näherungsmethoden angepasst werden.

Indem der Verlauf der Lampenspannung $V_{LP}(t)$ an die jeweilige Umgebungstemperatur $T_{amb}$ angepasst wird, lässt sich ein Betrieb der Strahlungsquelle 62 bei Quasi-Konstantleistung auch über den gesamten Betriebstemperaturbereich der elektronischen Anordnung 1 erreichen.

Mit der vorliegenden Erfindung kann eine Strahlungsquelle 62, wie z. B. ein thermischer Infrarot-Emitter, auf eine Art und Weise betrieben werden, welche die Vorteile eines Konstantspannungsbetriebs mit denen eines Konstantstrombetriebs kombiniert. Dazu zählen neben einer Vermeidung bzw. starken Reduktion des Lampenspitzenstroms eine geringe Drift über Temperatur sowie eine geringe Drift über die Lampenlebensdauer. Ein weiterer Vorteil ist der vergleichsweise geringe Schaltungsaufwand der vorgeschlagenen elektronischen Anordnung 1. Viele kommerzielle Mikrocontroller haben inzwischen einen gepufferten DAC integriert, sodass nur mehr ein geringer zusätzlicher Flächenanteil auf die Lampenansteuerung fällt. Zudem lassen sich durch den erzielbaren hohen Wirkungsgrad (im Bereich von 90 %) effiziente optische Gassensoren mit geringer Eigenerwärmung aufbauen

**Patentansprüche**

1. Elektronische Anordnung (1), umfassend eine Strahlungsquelle (62) und einen geregelten Spannungswandler (3), der ausgebildet ist, eine Lampenspannung ($V_{LP}$) für die Strahlungsquelle (62) bereitzustellen, um die Strahlungsquelle (62) für eine Impulsdauer ($t_P$) in einem eingeschalteten Zustand zu betreiben, wobei der Spannungswandler (3) ausgebildet ist, die Lampenspannung ($V_{LP}$) derart zu regeln, dass eine Referenzspannung ($V_{FB}$) an einem Feedback-Anschluss (FB) des Spannungswandlers (3) im Wesentlichen konstant gehalten wird, **gekennzeichnet durch** eine Spannungsquelle (DAC), die mit dem Feedback-Anschluss (FB) verbunden ist, wobei die Spannungsquelle (DAC) ausgebildet ist, eine zeitabhängige Steuerspannung ($V_{DAC}$) mit einem vordefinierten zeitlichen Verlauf bereitzustellen und hierdurch über den Feedback-Anschluss (FB) auf die Regelung des Spannungswandlers (3) derart einzuwirken, dass der Spannungswandler (3) in Abhängigkeit des vordefinierten zeitlichen Verlaufs der Steuerspannung ($V_{DAC}$) einen zeitlichen Verlauf der Lampenspannung ($V_{LP}$) in der Weise vorgibt, dass eine Leistung der Strahlungsquelle (62) während mindestens 90% der Impulsdauer ($t_P$) um höchstens 25% von einem Konstantleistungswert ($P_{LP}$) abweicht.

2. Elektronische Anordnung (1) nach Anspruch 1, **dadurch gekennzeichnet, dass** ein Einschaltspitzenstrom eines Eingangsstroms ($i_{in}$) in den Spannungswandler (3), welcher zu Beginn der Impulsdauer ($t_P$) auftreten kann, betragsmäßig kleiner oder gleich dem 1,25-Fachen eines über die Impulsdauer ($t_P$) gemittelten Eingangsstroms ($i_{in}$) des Spannungswandlers (3) ist.

3. Elektronische Anordnung (1) nach einem der vorangehenden Ansprüche, **dadurch gekennzeichnet, dass** die Impulsdauer ($t_P$) im Bereich von 50 ms bis 500 ms liegt.

4. Elektronische Anordnung (1) nach einem der vorangehenden Ansprüche **gekennzeichnet durch** einen Spannungsteiler, der eine Reihenschaltung aus einem ersten Widerstand ($R_1$) und einem zweiten Widerstand ($R_2$) umfasst, wobei der Spannungsteiler

   - auf Seiten des ersten Widerstands ($R_1$) mit der Strahlungsquelle (62) verbunden ist und
   - auf Seiten des zweiten Widerstands ($R_2$) mit einem Masseanschluss (15) der elektronischen Anordnung (1) verbunden ist, und

   wobei der Feedback-Anschluss (FB) mit dem Spannungsteiler in einem Bereich zwischen dem ersten Widerstand ($R_1$) und dem zweiten Widerstand ($R_2$) mit dem Spannungsteiler verbunden ist.

5. Elektronische Anordnung (1) nach einem der vorangehenden Ansprüche, **dadurch gekennzeichnet, dass** die Spannungsquelle (DAC) über einen dritten Widerstand ($R_3$) mit dem Feedback-Anschluss (FB) verbunden ist.

6. Elektronische Anordnung (1) nach Anspruch 4 und 5, **dadurch gekennzeichnet, dass** die Spannungsquelle (DAC) über den dritten Widerstand ($R_3$) mit dem Spannungsteiler in einem Bereich zwischen dem ersten Widerstand ($R_1$) und dem zweiten Widerstand ($R_2$) verbunden ist.

7. Elektronische Anordnung (1) nach einem der vorangehenden Ansprüche, **dadurch gekennzeichnet, dass** ein elektrischer Widerstand ($R_{LP}$) der Strahlungsquelle (62) einen positiven Temperaturkoeffizienten ($\alpha$) aufweist.

8. Elektronische Anordnung (1) nach einem der vorangehenden Ansprüche, **dadurch gekennzeichnet, dass** die Spannungsquelle (DAC) ein Digital-Analog-Wandler (DAC) ist oder einen solchen umfasst, wobei die zeitabhängige Steuerspannung ($V_{DAC}$) eine Ausgangsspannung des Digital-Analog-Wandlers (DAC) ist.

9. Optischer Gassensor (6), **dadurch gekennzeichnet, dass** der optische Gassensor (6) eine elektronische Anordnung (1) nach einem der vorangehenden Ansprüche umfasst.

10. Verfahren zur Leistungssteuerung einer Strahlungsquelle (62), **gekennzeichnet durch** die folgenden Schritte:

    - Bereitstellen einer elektronischen Anordnung (1) nach einem der Ansprüche 1 bis 9;
    - Betreiben der Strahlungsquelle (62) in dem eingeschalteten Zustand für eine Impulsdauer ($t_P$); und

- Bereitstellen der zeitabhängigen Steuerspannung ($V_{DAC}$) derart, dass die Leistung der Strahlungsquelle (62) während mindestens 90% der Impulsdauer ($t_P$) um höchstens 25% von einem Konstantleistungswert ($P_{LP}$) abweicht.

11. Verfahren nach Anspruch 10, **dadurch gekennzeichnet, dass** der zeitliche Verlauf der Steuerspannung ($V_{DAC}$) in Abhängigkeit einer Umgebungstemperatur *($T_{amb}$)* festgelegt wird.

12. Verfahren nach Anspruch 10 oder 11, **dadurch gekennzeichnet, dass** der zeitliche Verlauf der Steuerspannung ($V_{DAC}$) in Abhängigkeit eines Wärmewiderstands ($R_{th}$) der Strahlungsquelle (62) und/oder einer Wärmekapazität ($C_{th}$) der Strahlungsquelle (62) festgelegt wird.

13. Verfahren nach einem der Ansprüche 10 bis 12, **dadurch gekennzeichnet, dass** eine elektronische Anordnung (1) nach Anspruch 6 oder nach einem der Ansprüche 7 bis 9, soweit rückbezogen auf Anspruch 6, bereitgestellt wird, und dass die Steuerspannung ($V_{DAC}$) während der Impulsdauer ($t_P$) um höchstens 20% von einem durch die folgende Gleichung bestimmten zeitlichen Verlauf abweicht:

$$v_{DAC} = v_{FB} \frac{R_3}{R_1} \left( 1 + \frac{R_1}{R_2} + \frac{R_1}{R_3} \right)$$

$$- \frac{R_3}{R_1} \sqrt{P_{LP} R_{LP,25°C} \left[ 1 + \alpha \left( R_{th} P_{LP} \left( 1 - e^{-\frac{t}{R_{th}C_{th}}} \right) + T_{amb} - 25°C \right) \right]}$$

wobei

- $P_{Lp}$ ein vorgegebener Konstantleistungswert ist,
- $R_{LP,25°C}$ ein elektrischer Widerstand der Strahlungsquelle (62) bei 25°C ist,
- $\alpha$ ein Temperaturkoeffizient der Strahlungsquelle (62) ist,
- $R_{th}$ ein Wärmewiderstand der Strahlungsquelle (62) ist,
- $C_{th}$ eine Wärmekapazität der Strahlungsquelle (62) ist, und
- $T_{amb}$ eine Umgebungstemperatur ist.

14. Verfahren nach einem der Ansprüche 10 bis 13, **dadurch gekennzeichnet, dass** das Verfahren ohne eine Strommessung auskommt.

15. Verfahren nach einem der Ansprüche 10 bis 14, **dadurch gekennzeichnet, dass** das Verfahren ohne eine Messung der Lampenspannung ($V_{LP}$) und/oder ohne eine Messung der Leistung der Strahlungsquelle (61) auskommt.

**Claims**

1. Electronic arrangement (1) comprising a radiation source (62) and a controlled voltage transformer (3), which is embodied to provide a lamp voltage ($V_{LP}$) for the radiation source (62) in order to operate the radiation source (62) in an activated state for a pulse duration ($t_P$) ,
wherein the voltage transformer (3) is embodied for such closed-loop control of the lamp voltage ($V_{LP}$) that a reference voltage ($V_{FB}$) at a feedback connector (FP) of the voltage transformer (3) is kept substantially constant,
**characterized by**
a voltage source (DAC) connected to the feedback connector (FB), wherein the voltage source (DAC) is embodied to provide a time-dependent control voltage ($V_{DAC}$) with a predefined time profile and thus act on the closed-loop control of the voltage transformer (3) via the feedback connector (FB) in such a way
that the voltage transformer (3) specifies a time profile of the lamp voltage ($V_{LP}$) on the basis of the predefined time profile of the control voltage ($V_{DAC}$) in such a way that a power of the radiation source (62) deviates by no more than 25% from a constant power value ($P_{LP}$) during at least 90% of the pulse duration ($t_P$) .

2. Electronic arrangement (1) according to Claim 1, **characterized in that** an activation peak current of an input current ($i_{in}$) entering the voltage transformer (3), which may occur at the start of the pulse duration ($t_P$), is less than or equal to 1.25-times an input current ($i_{in}$) of the voltage transformer (3), as averaged over the pulse duration ($t_P$), in terms of magnitude.

3. Electronic arrangement (1) according to either of the preceding claims, **characterized in that** the pulse duration ($t_P$) is located in the range between 50 ms and 500 ms.

4. Electronic arrangement (1) according to any one of the preceding claims, **characterized by** a voltage divider comprising a series connection of a first resistor ($R_1$) and a second resistor ($R_2$),
   wherein the voltage divider

   - is connected to the radiation source (62) on the side of the first resistor ($R_1$) and
   - is connected to an earth connector (15) of the electronic arrangement (1) on the side of the second resistor ($R_2$), and

   wherein the feedback connector (FB) is connected to the voltage divider in a region between the first resistor ($R_1$) and the second resistor ($R_2$).

5. Electronic arrangement (1) according to any one of the preceding claims, **characterized in that** the voltage source (DAC) is connected to the feedback connector (FB) via a third resistor ($R_3$).

6. Electronic arrangement (1) according to Claim 4 and 5, **characterized in that** the voltage source (DAC) is connected via the third resistor ($R_3$) to the voltage divider in a region between the first resistor ($R_1$) and the second resistor ($R_2$).

7. Electronic arrangement (1) according to any one of the preceding claims, **characterized in that** an electrical resistance ($R_{LP}$) of the radiation source (62) has a positive temperature coefficient (a).

8. Electronic arrangement (1) according to any one of the preceding claims, **characterized in that** the voltage source (DAC) is or comprises a digital-to-analogue converter (DAC), wherein the time-dependent control voltage ($V_{DAC}$) is an output voltage of the digital-to-analogue converter (DAC).

9. Optical gas sensor (6), **characterized in that** the optical gas sensor (6) comprises an electronic arrangement (1) according to any one of the preceding claims.

10. Method for controlling the power of a radiation source (62), **characterized by** the following steps:

    - providing an electronic arrangement (1) according to any one of Claims 1 to 9;
    - operating the radiation source (62) in the activated state for a pulse duration ($t_P$) ; and
    - providing the time-dependent control voltage (vDAC) in such a way that the power of the radiation source (62) deviates by no more than 25% from a constant power value ($P_{LP}$) during at least 90% of the pulse duration ($t_P$) .

11. Method according to Claim 10, **characterized in that** the time profile of the control voltage ($V_{DAC}$) is set on the basis of an ambient temperature ($T_{amb}$).

12. Method according to Claim 10 or 11, **characterized in that** the time profile of the control voltage ($V_{DAC}$) is set on the basis of a thermal resistance ($R_{th}$) of the radiation source (62) and/or a heat capacity ($C_{th}$) of the radiation source (62) .

13. Method according to any one of Claims 10 to 12, **characterized in that** provision is made of an electronic arrangement (1) according to Claim 6 or according to any one of Claims 7 to 9, provided these refer back to Claim 6, and **in that**, during the pulse duration ($t_P$), the control voltage ($V_{DAC}$) deviates by no more than 20% from a time profile determined by the following equation:

$$v_{DAC} = v_{FB} \frac{R_3}{R_1} \left( 1 + \frac{R_1}{R_2} + \frac{R_1}{R_3} \right)$$

$$- \frac{R_3}{R_1} \sqrt{ P_{LP} R_{LP,25°C} \left[ 1 + \alpha \left( R_{th} P_{LP} \left( 1 - e^{-\frac{t}{R_{th} C_{th}}} \right) + T_{amb} - 25°C \right) \right] }$$

where

- $P_{LP}$ is a specified constant power value,
- $R_{LP,25°}$ is an electrical resistance of the radiation source (62) at 25°C,
- $\alpha$ is a temperature coefficient of the radiation source (62),
- $R_{th}$ is a thermal resistance of the radiation source (62),
- $C_{th}$ is a heat capacity of the radiation source (62) and
- $T_{amb}$ is an ambient temperature.

**14.** Method according to any one of Claims 10 to 13, **characterized in that** the method makes do without a current measurement.

**15.** Method according to any one of Claims 10 to 14, **characterized in that** the method makes do without measuring the lamp voltage ($V_{LP}$) and/or without measuring the power of the radiation source (61).

**Revendications**

**1.** Dispositif électronique (1), comprenant une source de rayonnement (62) et un convertisseur de tension régulé (3) conçu pour fournir une tension de lampe ($V_{LP}$) à la source de rayonnement (62) afin de faire fonctionner la source de rayonnement (62) pendant une durée d'impulsion ($t_p$) dans un état activé,
dans lequel le convertisseur de tension (3) est conçu pour réguler la tension de lampe ($V_{LP}$) de manière à ce qu'une tension de référence ($V_{FB}$) soit maintenue sensiblement constante au niveau d'une borne de rétroaction (FB) du convertisseur de tension (3), **caractérisé par** une source de tension (DAC) reliée à la borne de rétroaction (FB), dans lequel la source de tension (DAC) est conçue pour fournir une tension de commande dépendant du temps ($V_{DAC}$) présentant une courbe temporelle prédéfinie et pour agir ainsi par le biais de la connexion de rétroaction (FB) sur la régulation du convertisseur de tension (3), de telle manière que le convertisseur de tension (3) prédéfinisse une courbe temporelle de la tension de lampe ($V_{LP}$) en fonction de la courbe temporelle prédéfinie de la tension de commande ($V_{DAC}$) afin qu'une puissance de la source de rayonnement (62) s'écarte d'une valeur de puissance constante ($P_{LP}$) d'au plus 25% pendant au moins 90% de la durée d'impulsion ($t_p$).

**2.** Dispositif électronique (1) selon la revendication 1, **caractérisé en ce qu'**un courant crête d'activation d'un courant d'entrée ($i_{in}$) du convertisseur de tension (3), qui peut se produire au début de la durée d'impulsion ($t_p$), est inférieur ou égal à 1,25 fois un courant d'entrée ($i_{in}$), moyenné sur la durée d'impulsion ($t_p$), du convertisseur de tension (3).

**3.** Dispositif électronique (1) selon l'une des revendications précédentes, **caractérisé en ce que** la durée d'impulsion ($t_p$) se situe dans la plage de 50 ms à 500 ms.

**4.** Dispositif électronique (1) selon l'une des revendications précédentes, **caractérisé par** un diviseur de tension comprenant un montage en série d'une première résistance ($R_1$) et d'une deuxième résistance ($R_2$), dans lequel le diviseur de tension

- est relié à la source de rayonnement (62) du côté de la première résistance ($R_1$) et
- est relié à une borne de masse (15) du dispositif électronique (1) du côté de la deuxième résistance ($R_2$), et dans lequel la borne de rétroaction (FB) du diviseur de tension est reliée au diviseur de tension dans une zone située entre la première résistance ($R_1$) et la deuxième résistance ($R_2$).

**5.** Dispositif électronique (1) selon l'une des revendications précédentes, **caractérisé en ce que** la source de tension (DAC) est reliée à la borne de rétroaction (FB) par l'intermédiaire d'une troisième résistance ($R_3$).

**6.** Dispositif électronique (1) selon les revendications 4 et 5, **caractérisé en ce que** la source de tension (DAC) est reliée par le biais de la troisième résistance ($R_3$) au diviseur de tension dans une zone située entre la première résistance ($R_1$) et la deuxième résistance ($R_2$).

**7.** Dispositif électronique (1) selon l'une des revendications précédentes, **caractérisé en ce qu'**une résistance électrique ($R_{LP}$) de la source de rayonnement (62) présente un coefficient de température positif (a).

8. Dispositif électronique (1) selon l'une des revendications précédentes, **caractérisé en ce que** la source de tension (DAC) est ou comprend un convertisseur numérique-analogique (DAC), dans lequel la tension de commande en fonction du temps ($V_{DAC}$) est une tension de sortie du convertisseur numérique-analogique (DAC).

9. Capteur optique de gaz (6), **caractérisé en ce que** le capteur optique de gaz (6) comprend un dispositif électronique (1) selon l'une des revendications précédentes.

10. Procédé de commande de la puissance d'une source de rayonnement (62), **caractérisé par** les étapes suivantes :

    - prévoir un dispositif électronique (1) selon l'une des revendications 1 à 9 ;
    - faire fonctionner la source de rayonnement (62) dans l'état activé pendant une durée d'impulsion ($t_p$) ; et
    - fournir la tension de commande en fonction du temps ($V_{DAC}$) de telle manière que la puissance de la source de rayonnement (62) s'écarte d'une valeur de puissance constante ($P_{LP}$) d'au plus 25% pendant au moins 90% de la durée d'impulsion ($t_p$) .

11. Procédé selon la revendication 10, **caractérisé en ce que** la courbe temporelle de la tension de commande ($V_{DAC}$) est déterminée en fonction d'une température ambiante ($T_{amb}$) .

12. Procédé selon la revendication 10 ou 11, **caractérisé en ce que** la courbe temporelle de la tension de commande ($V_{DAC}$) est déterminée en fonction d'une résistance thermique ($R_{th}$) de la source de rayonnement (62) et/ou d'une capacité thermique ($C_{th}$) de la source de rayonnement (62) .

13. Procédé selon l'une des revendications 10 à 12, **caractérisé en ce qu'**il est prévu un dispositif électronique (1) selon la revendication 6 ou selon l'une des revendications 7 à 9, dans la mesure où celle-ci fait référence à la revendication 6, et **en ce que** la tension de commande ($V_{DAC}$) s'écarte d'au plus 20 % pendant la durée d'impulsion ($t_p$) d'une courbe temporelle déterminée par l'équation suivante :

$$v_{DAC} = \frac{v_{FB} \frac{R_3}{R_1}\left(1 + \frac{R_1}{R_2} + \frac{R_1}{R_3}\right)}{-\frac{R_3}{R_1}\sqrt{P_{LP}R_{LP,25°C}\left[1 + \alpha\left(P_{th}R_{LP}\left(1 - e^{-\frac{t}{R_{th}C_{th}}}\right) + T_{amb} - 25°C\right)\right]}}$$

où

    - $P_{LP}$ est une valeur de puissance constante prédéterminée,
    - $R_{LP,25°C}$ est une résistance électrique de la source de rayonnement (62) à 25°C,
    - $\alpha$ est un coefficient de température de la source de rayonnement (62),
    - $R_{th}$ est une résistance thermique de la source de rayonnement (62),
    - $C$th est une capacité thermique de la source de rayonnement (62), et
    - $T_{amb}$ est une température ambiante.

14. Procédé selon l'une des revendications 10 à 13, **caractérisé en ce que** le procédé ne nécessite pas de mesure de courant.

15. Procédé selon l'une des revendications 10 à 14, **caractérisé en ce que** le procédé ne nécessite pas de mesure de la tension de lampe ($V_{LP}$) et/ou de mesure de la puissance de la source de rayonnement (61).

Fig. 1

$$i_{LP} = v_{LP}/R_{LP}$$

62

$$R_{LP} = R_{LP.25\,°C}\,(1 + \alpha\Delta T)$$
$$\Delta T = T_{LP} - 25\,°C$$

$V_{LP}$

# Fig. 2A

62

$$P = v_{LP} \cdot i_{LP}$$

621

$R_{th}$

$C_{th}$

$T_{LP}$

622

$T_{amb}$

# Fig. 2B

Fig. 3

Fig. 4A

Fig. 4B

Fig. 5A

Fig. 5B

**IN DER BESCHREIBUNG AUFGEFÜHRTE DOKUMENTE**

**In der Beschreibung aufgeführte Patentdokumente**

- US 20160172855 A1
- US 5095270 A
- US 6023069 A
- US 20120078532 A1